# EUROPEAN PATENT SPECIFICATION

(11) **EP 1 690 748 B1**
(45) Date of publication and mention of the grant of the patent: **11.06.2008**
(21) Application number: 06075231.8
(22) Date of filing: 02.02.2006
(51) Int. Cl.: B60R 21/01

(54) **Vehicle rollover detection method based on differential Z-axis acceleration**
Verfahren zur Erkennung eines Fahrzeugüberschlags auf der Basis der Differenz der Z-Achse-Beschleunigung
Procédé de détection de retournement de véhicule basé sur la difference de l'accélération de l'axe-Z

(30) Priority: 11.02.2005 US 56682
(43) Date of publication of application: 16.08.2006
(73) Proprietor: Delphi Technologies, Inc., Troy, Michigan 48007 (US)
(72) Inventor: Schubert, Peter J., Carmel, IN 46032-7007 (US); Cluff, Charles A., Zionsville, IN 46077 (US); Brogoitti, James H., Russiaville, IN 76060 (US); Manlove, Gregory J., Kokomo, IN 46902 (US); Robertson, John W., Noblesville, IN 46060 (US); Rich, David B., Kokomo, IN 46901 (US)
(74) Representative: Denton, Michael John

(56) References cited:
- GB-A- 2 292 126
- US-A- 5 096 219
- US-A1- 2002 075 140
- US-A1- 2002 156 561
- US-B1- 6 249 730

## Description

### TECHNICAL FIELD

The present invention relates to rollover detection in motor vehicles, and more particularly to rollover detection based on laterally displaced measures of z-axis vehicle acceleration.

### BACKGROUND OF THE INVENTION

Various rollover detection methodologies have been developed for activating electrically deployed rollover safety devices such as air bags, side curtains, seat belt pretensioners and pop-up roll bars, and/or for activating visual, aud itory or haptic warnings. However, rollover detection has not enjoyed widespread usage in production vehicles due at least in part to the cost associated with angular rate sensing. Accordingly, what is desired is a lower-cost rollover detection methodology that does not require angular rate sensors.

US-A-5096219 discloses a method in accordance with the preamble of claim 1. US-A-2002/156561 discloses a suspension control method using accelerometer measurements.

### SUMMARY OF THE INVENTION

The present invention is directed to an improved method of detecting an impending rollover event based on differential z-axis (i.e., vertical) acceleration. Vertical or z-axis acceleration measured at laterally opposite sides of the vehicle are filtered and differenced, and the differential acceleration is processed and compared to a calibrated threshold to detect impending rollover. In a preferred implementation, separate algorithms are employed to detect different categories of rollover events, and a sum of the z-axis acceleration measurements is used as a safing signal.

### BRIEF DESCRIPTION OF THE DRAWINGS

FIG. 1 is a diagram of a vehicle including laterally opposed z-axis accelerometers and a microprocessor-based control unit (MCU) for carrying out the rollover detection method of this invention;
FIG. 2 is a simplified block diagram of a rollover detection method carried out by the MCU of FIG. 1 according to this invention;
FIG. 3 is a detailed block diagram of a rollover detection method carried out by the MCU of FIG. 1 according to this invention;
FIG. 4A is a block diagram depicting a first alterative embodiment of a ditch drift rollover detection method;
FIG. 4B is a block diagram depicting a second alterative embodiment of a ditch drift rollover detection method; and
FIG. 4C is a block diagram depicting a third alterative embodiment of a ditch drift rollover detection method.

### DESCRIPTION OF THE PREFERRED EMBODIMENT

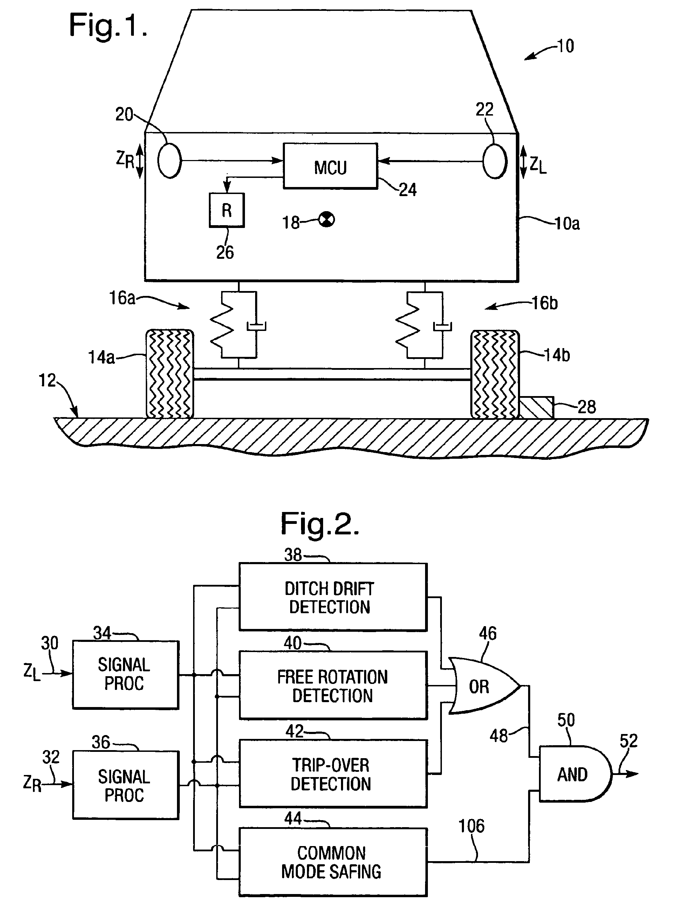

FIG. 1 diagrammatically depicts the rear of a vehicle 10 operated on a surface 12, and receding from the viewer. The vehicle body 10a is coupled to wheels 14a, 14b by a set of suspension members 16a, 16b, and the vehicle has a center of mass (COM) approximately where indicated by the reference numeral 18. First and second linear accelerometers 20 and 22 are mounted on laterally opposing portions of the vehicle body 10a, and oriented to detect acceleration along the z-axis (i.e., vertical axis) of the vehicle. For example, the accelerometers 20 and 22 may be respectively mounted in the left-side and right-side door pillars of the vehicle 10. This is a particularly convenient placement in terms of system cost, as many vehicles will already be equipped with similarly placed side-impact sensors, and the accelerometers 20 and 22 may be co-located with the side-impact sensors. Ideally, the sensors 20 and 22 are positioned equidistant from COM 18, but any differences can be accounted for by scaling, or the like. In any case, the output of accelerometer 20 is designated as Z_{R}, and the output of accelerometer 22 is designated as Z_{L}. The acceleration signals Z_{R} and Z_{L} are applied as inputs along with other commonly measured parameters to a microprocessor-based control unit (MCU) 24. The MCU 24 is coupled to various rollover restraints (R) such as seat belt pretensioners, and side curtain airbag and/or a pop-up roll bar (collectively designated by the block 26), and issues deployment commands for one or more of the restraints when an impending rollover event is detected.

In general, an impending rollover event is detected according to this invention by considering the difference between the right and left z-axis acceleration signals Z_{R} and Z_{L}. Rollover events are categorized by the trip condition, and MCU 24 executes rollover detection algorithms for each category of rollover event. Additionally, the summation of Z_{R} and Z_{L} may be used as a safing signal, possibly in combination with one or more conventional safmg signals such as y-axis (i.e., lateral) acceleration. FIG. 2 illustrates the framework of this approach, where Z_{L} and Z_{R} signals on input lines 30, 32 are respectively processed by blocks 34, 36, and then supplied to three different rollover detection algorithm blocks 38, 40, 42 and a safing block 44. If one or more of the blocks 38, 40, 42 detects a rollover event, OR-gate 46 produces a signal on line 48, and if the safing block 44 concurrently detects a condition consistent with rollover, AND-gate 50 produces a restraint deployment command on output line 52.

For purposes of this invention, rollover events are divided into three different categories: ditch drift events, free rotation events and trip-over events. Ditch drift events typically occur when an inattentive driver allows the vehicle to drift off the road and into a gradual sloping ditch; the roll angle of the vehicle gradually increases, and then builds rapidly at the onset of rollover. In general, the ditch drift detection algorithm (block 38 of FIG. 2) is designed to identify low-magnitude differential z-axis acceleration over a relatively long duration of up to several seconds. Free rotation events occur when the wheels 14a, 14b on one side of the vehicle ride over an obstacle or drop off the roadway and furrow into soft soil or sand; this imparts a tumbling motion that results in rotation about COM 18. In general, the free rotation detection algorithm (block 40 of FIG. 2) is designed to identify substantially circular rotation about COM 18 over an interval of approximately 200 milliseconds to 1 second. Trip-over events occur when the wheels 14a, 14b on one side of a sideways-sliding vehicle contact a fixed barrier such as the curb 28 of FIG. 1; this quickly imparts high energy rotation about curb 28. In general, the trip-over detection algorithm (block 42 of FIG. 2) is designed to identify high-magnitude differential z-axis acceleration over an interval of less than 200 milliseconds.

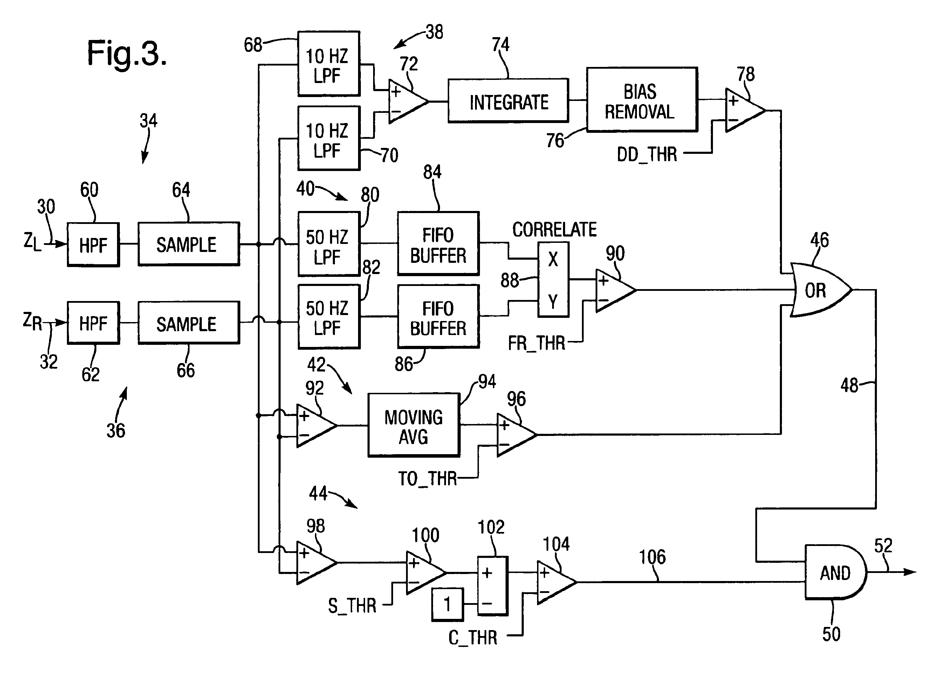

FIG. 3 depicts a detailed version of the diagram of FIG. 2, with application of the same reference numerals where appropriate. The input signal processing function (i.e., blocks 34 and 36 of FIG. 2) in each case involves high-pass filtering (HPF) of the respective analog z-axis acceleration input as indicated by blocks 60 and 62, and A/D sampling of the filtered signals as indicated by the blocks 64 and 66. The high-pass filtering may be accomplished in hardware prior to sampling as shown, or in software after sampling. In either case, the high-pass filtering removes all slowing varying error signals (due to offsets, bias, drift, aging and the like) while passing acceleration frequency components low enough to detect slowly occurring ditch drift events.

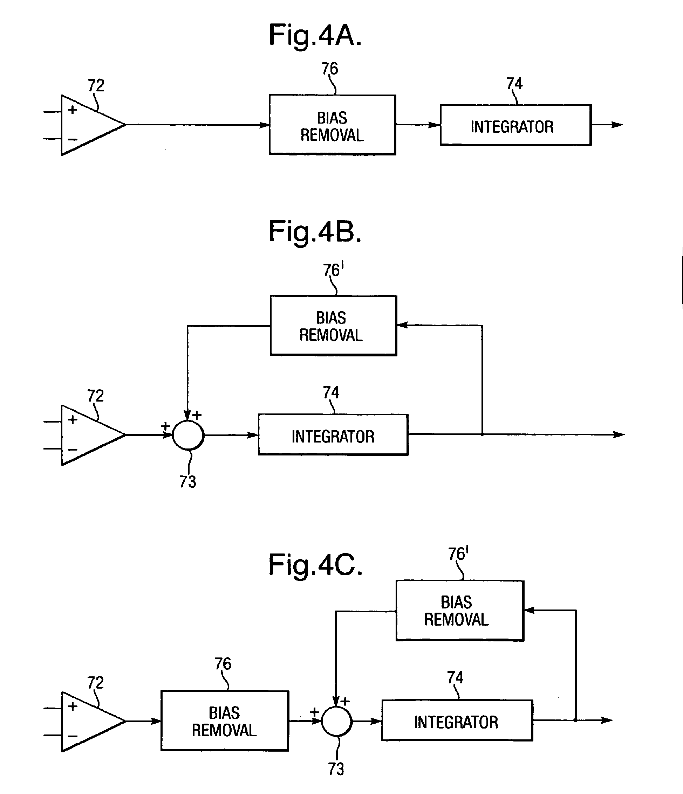

As indicated above, the ditch drift detection algorithm (i.e., block 38 of FIG. 2) is designed to identify low-magnitude differential z-axis acceleration over a relatively long duration of up to several seconds. To this end, the processed z-axis acceleration inputs are respectively applied to low-pass filter (LPF) blocks 68 and 70 which pass acceleration signals below a cutoff frequency of 10Hz - 20Hz, for example. The filtered acceleration signals are then differenced by amplifier 72, and the acceleration differential is applied as an input to integrator 74, which produces a corresponding roll rate. The block 76 removes bias errors accumulated due to non-roll related excursions of the acceleration differential as explained below in reference to FIGS. 4A, 4B and 4C, and the comparator 78 compares the output of block 76 to a calibrated ditch drift threshold DD_THR. When the output of block 76 exceeds DD_THR, the output of comparator 78 is activated to indicate an impending ditch drift rollover event. In some applications, it may be desirable to perform a second integration for producing a roll angle corresponding to the determined roll rate; in such cases, a ditch drift rollover event can be detected when the determined roll angle exceeds a calibrated roll angle threshold. Additionally, the determined roll angle can be used to detect a fall-back event following a near-rollover of the vehicle by identifying a sharp reversal in roll angle; this can be useful for the safing function, as mentioned below.

FIGS. 4A, 4B and 4C depict alternate mechanizations of the ditch drift detection algorithm blocks 74 and 76. In the embodiment of FIG. 4A, the blocks 74 and 76 are reversed relative to the embodiment of FIG. 2 so that the bias errors are removed prior to integration. In the embodiment of FIG. 4B, the bias removal block 76' operates on the output of integrator 74 as in FIG. 2, but produces a noise cancellation feedback signal that is combined with the output of amplifier 72 by summing junction 73. Finally, FIG. 4C depicts an embodiment including a noise cancellation feedback block 76' like that of FIG. 4B and a pre-integration bias removal block 76 like that of FIG. 4A.

As mentioned above, the free rotation detection algorithm (block 40 of FIG. 2) is designed to identify substantially circular rotation about COM 18 over an interval of approximately 200 milliseconds to 1 second. To this end, the processed z-axis acceleration inputs are respectively applied to low-pass filter (LPF) blocks 80, 82 which pass acceleration signals below a cutoff frequency of 50Hz - 100Hz, for example. In this case, the filtered acceleration signals are stored in respective First-In-First-Out (FIFO) buffers 84, 86 for a period of time covering the expected 200 millisecond-to-1 second duration of a free rotation rollover event. The block 88 correlates the signals buffered in blocks 84 and 86, and produces a correlation signal that ranges from negative one to positive one. A correlation signal of negative one occurs when the two acceleration signals are equal and opposite, while a correlation signal of positive one occurs when the two acceleration signals have essentially the same sign and magnitude. The comparator 90 compares the correlation signal with a calibrated free rotation threshold FR_THR , such as negative 0.7 for example. When correlation signal is more negative than FR_THR, the output of comparator 90 is activated to indicate an impending free rotation rollover event.

As mentioned above, the trip-over detection algorithm (block 42 of FIG. 2) is designed to identify high-magnitude differential z-axis acceleration over an interval of less than 200 milliseconds. The acceleration signals are differenced by block 92, and applied to block 94 which computes a moving average of the acceleration differential over an interval of 200 milliseconds, for example. The comparator 96 compares the moving average with a calibrated trip-over threshold TO_THR; when the moving average exceeds TO_THR, the output of comparator 96 is activated to indicate an impending trip-over rollover event. If desired, band-pass filtering or power spectrum analysis may be used instead of the moving average computation of block 94.

The safing function (i.e., block 44 of FIG. 2) is achieved by blocks 98, 100, 102, 104 of FIG. 3. The block 98 sums the z-axis acceleration signals to provide an indication of the vehicle's z-axis heaving motion, and comparator 100 compares the acceleration sum to a calibrated safing threshold S_THR. Counts are periodically accumulated in up/down counter 102 so long as the acceleration sum exceeds S_THR, and when the count exceeds a calibrated count threshold C_THR, the comparator 104 produces an output on line 106 to indicate that the vehicle motion is consistent with rollover. If desired, the counting function of block 102 could be replaced with an integrator, or similar function. Also, other safing signals such as y-axis acceleration can be utilized, either in addition to or instead of the illustrated z-axis acceleration summation. Further, the safing function may be structured to rule out rollover when specified conditions are detected, such as operation on a very rough road, or a fall-back event after a near-rollover of the vehicle as mentioned above.

In summary, the method of the present invention provides a reliable and cost-effective way of detecting an impending rollover event based on differential z-axis acceleration measurements. While the method of the present invention has been described with respect to the illustrated embodiment, it is recognized that numerous modifications and variations in addition to those mentioned herein will occur to those skilled in the art. For example, the various thresholds may be calibrated as a function of other parameters such as lateral acceleration and/or vehicle speed, and so on. Accordingly, it is intended that the invention not be limited to the disclosed embodiment, but that it have the full scope permitted by the language of the following claims.

## Claims

1. A method of detecting an impending rollover event of a vehicle (10), comprising the steps of:
measuring a first acceleration (20) at a first location of said vehicle (10) and a second acceleration (22) at a second location of said vehicle (10) that is laterally displaced from said first location;
**characterised in that** the first and second acceleration measurements are in the z-axis; and by
determining a difference between said first z-axis acceleration and said second z-axis acceleration (72/88/92); and
detecting an impending rollover event of said vehicle based on said difference (78/90/96, 46).

2. The method of claim 1, including the step of:
high pass filtering the measured first and second z-axis accelerations before determining said difference (34, 36).

3. The method of claim 1, where the step of detecting an impending rollover event includes the steps of:
low pass filtering the measured first and second z-axis accelerations to attenuate acceleration components above a specified frequency before determining said difference (68, 70/80, 82).

4. The method of claim 3, wherein said specified frequency is in a range of approximately 10Hz to 20 Hz to identify an acceleration difference characteristic of a rollover event triggered by a ditch drift condition (68, 70).

5. The method of claim 3, wherein said specified frequency is in a range of approximately 50 Hz to 100Hz to identify an acceleration difference characteristic of a rollover event triggered by a free rotation condition (80, 82).

6. The method of claim 1, wherein the step of determining a difference between said first z-axis acceleration and said second z-axis acceleration includes the steps of:
buffering samples of said first z-axis acceleration and samples of said second z-axis acceleration (84, 86); and
determining a correlation between the buffered samples of said first z-axis acceleration and the buffered samples of said second z-axis acceleration (88).

7. The method of claim 6, wherein the step of detecting an impending rollover event includes the step of:
comparing said correlation to a calibrated threshold (90).

8. The method of claim 1, wherein the step of detecting an impending rollover event includes the steps of:
integrating said difference (74) to determine a roll rate of said vehicle (10); and
detecting an impending rollover event when the determined roll rate exceeds a calibrated threshold (78).

9. The method of claim 8, including the step of:
high pass filtering at least one of said difference and said determined roll rate to remove bias errors due to non-roll related excursions of said difference (76/76').

10. The method of claim 1, wherein the step of detecting an impending rollover event includes the step of:
computing a moving average of said difference over a predefined time interval (94); and
detecting an impending rollover event if said moving average exceeds a calibrated threshold (96).

11. The method of claim 1, including the steps of:
determining a sum of said first z-axis acceleration and said second z-axis acceleration (98); and
detecting an impending rollover event of said vehicle based on said difference only if said sum also exceeds a calibrated threshold for at least a predetermined period of time (100, 102, 104, 50).

12. The method of claim 1, including the steps of:
twice integrating said difference to determine a roll angle of said vehicle (74); and
detecting an impending rollover event when the determined roll angle exceeds a calibrated threshold (78).

13. he method of claim 1, including the steps of:
twice integrating said difference to determine a roll angle of said vehicle (74); and
inhibiting the step of detecting an impending rollover event when the determined roll angle is characteristic of a fall-back event following a near rollover of said vehicle (50).

14. The method of claim 1, including the steps of:
carrying out a plurality of rollover detection algorithms that individually process said difference to recognize different types of impending rollover events (38, 40, 42); and
detecting an impending rollover event when an impending rollover event is recognized by at least one of said rollover detection algorithms (46).

15. The method of claim 14, including the step of:
determining a sum of said first z-axis acceleration and said second z-axis acceleration (44); and
detecting an impending rollover event of said vehicle based on said difference only if said sum is characteristic of a rollover event (50).

16. The method of claim 14, wherein said different types of impending rollover events comprise rollover events triggered by different operating conditions of said vehicle (10).

17. The method of claim 16, wherein said different operating conditions comprise a ditch drift condition (38), a free rotation condition (40) and a trip-over condition (42).

18. The method of claim 1, wherein said first and second locations are laterally disposed about a center of mass (18) of said vehicle (10).

19. The method of claim 18, wherein said first and second locations are symmetrically disposed about said center of mass (18).

## Patentansprüche

1. Verfahren zum Detektieren eines bevorstehenden Überschlagereignisses eines Fahrzeugs (10), das die Schritte umfasst, dass
eine erste Beschleunigung (20) an einem ersten Ort des Fahrzeugs (10) und eine zweite Beschleunigung (22) an einem zweiten Ort des Fahrzeugs (10), der von dem ersten Ort seitlich versetzt ist, gemessen werden;
**dadurch gekennzeichnet, dass**
die erste und die zweite Beschleunigungsmessung auf der z-Achse stattfinden; und dass
eine Differenz zwischen der ersten z-Achsenbeschleunigung und der zweiten z-Achsenbeschleunigung ermittelt wird (72/88/92); und
ein bevorstehendes Überschlagereignis des Fahrzeugs auf der Grundlage der Differenz detektiert wird (78/90/96, 46).

2. Verfahren nach Anspruch 1, das den Schritt umfasst, dass die gemessene erste und zweite z-Achsenbeschleunigung vor dem Ermitteln der Differenz hochpassgefiltert werden (34, 36).

3. Verfahren nach Anspruch 1,
wobei der Schritt des Detektierens eines bevorstehenden Überschlagereignisses die Schritte umfasst, dass
die gemessene erste und zweite z-Achsenbeschleunigung tiefpassgefiltert werden, um Beschleunigungskomponenten über einer spezifizierten Frequenz zu dämpfen, bevor die Differenz ermittelt wird (68, 70/80, 82).

4. Verfahren nach Anspruch 3,
wobei die spezifizierte Frequenz in einem Bereich von ungefähr 10 Hz bis 20 Hz liegt, um eine Beschleunigungsdifferenzeigenschaft eines Überschlagereignisses zu identifizieren, das durch einen Grabendriftzustand ausgelöst wird (68, 70).

5. Verfahren nach Anspruch 3,
wobei die spezifizierte Frequenz in einem Bereich von ungefähr 50 Hz bis 100 Hz liegt, um eine Beschleunigungsdifferenzeigenschaft eines Überschlagereignisses zu identifizieren, das durch einen Zustand eines freien Drehens ausgelöst wird (80, 82).

6. Verfahren nach Anspruch 1,
wobei der Schritt des Ermittelns einer Differenz zwischen der ersten z-Achsenbeschleunigung und der zweiten z-Achsenbeschleunigung die Schritte umfasst, dass
Abtastwerte der ersten z-Achsenbeschleunigung und Abtastwerte der zweiten z-Achsenbeschleunigung gepuffert werden (84, 86); und eine Korrelation zwischen den gepufferten Abtastwerten der ersten z-Achsenbeschleunigung und den gepufferten Abtastwerten der zweiten z-Achsenbeschleunigung ermittelt wird (88).

7. Verfahren nach Anspruch 6,
wobei der Schritt des Detektierens eines bevorstehenden Überschlagereignisses den Schritt umfasst, dass
die Korrelation mit einem kalibrierten Schwellenwert verglichen wird (90).

8. Verfahren nach Anspruch 1,
wobei der Schritt des Detektierens eines bevorstehenden Überschlagereignisses die Schritte umfasst, dass
die Differenz integriert wird (74), um eine Wankrate des Fahrzeugs (10) zu ermitteln; und
ein bevorstehendes Überschlagereignis detektiert wird, wenn die ermittelte Wankrate einen kalibrierten Schwellenwert übersteigt (78).

9. Verfahren nach Anspruch 8, das den Schritt umfasst, dass die Differenz und/oder die ermittelte Wankrate hochpassgefiltert werden, um systematische Fehler aufgrund von nicht mit einem Wanken in Beziehung stehenden Abweichungen der Differenz zu entfernen (76/76').

10. Verfahren nach Anspruch 1,
wobei der Schritt des Detektierens eines bevorstehenden Überschlagereignisses die Schritte umfasst, dass
ein gleitender Mittelwert der Differenz über einem vordefinierten Zeitintervall berechnet wird (94); und
ein bevorstehendes Überschlagereignis detektiert wird, wenn der gleitende Mittelwert einen kalibrierten Schwellenwert übersteigt (96).

11. Verfahren nach Anspruch 1, das die Schritte umfasst, dass
eine Summe der ersten z-Achsenbeschleunigung und der zweiten z-Achsenbeschleunigung ermittelt wird (98); und
ein bevorstehendes Überschlagereignis des Fahrzeugs auf der Grundlage der Differenz nur detektiert wird, wenn die Summe auch für mindestens eine vorbestimmte Zeitdauer einen kalibrierten Schwellenwert übersteigt (100, 102, 104, 50).

12. Verfahren nach Anspruch 1, das die Schritte umfasst, dass
die Differenz zweimal integriert wird, um einen Wankwinkel des Fahrzeugs zu ermitteln (74); und
ein bevorstehendes Überschlagereignis detektiert wird, wenn der ermittelte Wankwinkel einen kalibrierten Schwellenwert übersteigt (78).

13. Verfahren nach Anspruch 1, das die Schritte umfasst, dass
die Differenz zweimal integriert wird, um einen Wankwinkel des Fahrzeugs zu ermitteln (74); und
der Schritt des Detektierens eines bevorstehenden Überschlagereignisses verhindert wird, wenn der ermittelte Wankwinkel für ein Zurückfallereignis nach einem Beinahe-Überschlag des Fahrzeugs charakteristisch ist (50).

14. Verfahren nach Anspruch 1, das die Schritte umfasst, dass mehrere Überschlagdetektionsalgorithmen ausgeführt werden, die die Differenz individuell verarbeiten, um verschiedene Typen von bevorstehenden Überschlagereignissen zu erkennen (38, 40, 42); und ein bevorstehendes Überschlagereignis detektiert wird, wenn durch mindestens einen der Überschlagdetektionsalgorithmen ein bevorstehendes Überschlagereignis erkannt wird (46).

15. Verfahren nach Anspruch 14, das die Schritte umfasst, dass
eine Summe der ersten z-Achsenbeschleunigung und der zweiten z-Achsenbeschleunigung ermittelt wird (44); und
ein bevorstehendes Überschlagereignis des Fahrzeugs auf der Grundlage der Differenz nur detektiert wird, wenn die Summe für ein Überschlagereignis charakteristisch ist (50).

16. Verfahren nach Anspruch 14,
wobei die verschiedenen Typen von bevorstehenden Überschlagereignissen Überschlagereignisse umfassen, die durch verschiedene Betriebszustände des Fahrzeugs (10) ausgelöst werden.

17. Verfahren nach Anspruch 16,
wobei die verschiedenen Betriebszustände einen Grabendriftzustand (38), einen Zustand eines freien Drehens (40) und einen Stolperzustand (42) umfassen.

18. Verfahren nach Anspruch 1,
wobei der erste und der zweite Ort seitlich um einen Schwerpunkt (18) des Fahrzeugs (10) angeordnet sind.

19. Verfahren nach Anspruch 18,
wobei der erste und der zweite Ort symmetrisch um den Schwerpunkt (18) angeordnet sind.

## Revendications

1. Procédé pour détecter un événement de retournement imminent d'un véhicule (10), comportant les étapes consistant à :
mesurer une première accélération (20) au niveau d'un premier emplacement dudit véhicule (10), et une seconde accélération (22) au niveau d'un second emplacement dudit véhicule (10) qui est décalé latéralement par rapport audit premier emplacement,
**caractérisé en ce que** les première et seconde mesures d'accélération sont selon l'axe z ; et par les étapes consistant à
déterminer une différence entre ladite première accélération selon l'axe z et ladite seconde accélération selon l'axe z (72, 88, 92), et
détecter un événement de retournement imminent dudit véhicule sur la base de ladite différence (78 ; 90 ; 96, 46).

2. Procédé selon la revendication 1, comportant l'étape de filtrage passe-haut des première et seconde accélérations selon l'axe z mesurées avant la détermination de ladite différence (34, 36).

3. Procédé selon la revendication 1, dans lequel l'étape de détection d'un événement de retournement imminent comprend les étapes de filtrage passe-bas des première et seconde accélérations selon l'axe z mesurées pour atténuer des composantes d'accélération au-dessus d'une fréquence spécifiée avant de déterminer ladite différence (68, 70 ; 80, 82).

4. Procédé selon la revendication 3, dans lequel ladite fréquence spécifiée est dans une plage d'approximativement 10 Hz à 20 Hz pour identifier une caractéristique de différence d'accélération d'un événement de retournement déclenché par un état glissement dans une tranchée (68, 70).

5. Procédé selon la revendication 3, dans lequel ladite fréquence spécifiée est dans une plage d'approximativement 50 Hz à 100 Hz pour identifier une caractéristique de différence d'accélération d'un événement de retournement déclenché par un état de rotation libre (80, 82).

6. Procédé selon la revendication 1, dans lequel l'étape de détermination d'une différence entre ladite première accélération selon l'axe z et ladite seconde accélération selon l'axe z comprend les étapes consistant à :
mettre en mémoire tampon des échantillons de ladite première accélération selon l'axe z et des échantillons de ladite seconde accélération selon l'axe z (84, 86), et
déterminer une corrélation entre les échantillons mis en mémoire tampon de ladite première accélération selon l'axe z et les échantillons mis en mémoire tampon de ladite seconde accélération selon l'axe z (88).

7. Procédé selon la revendication 6, dans lequel l'étape de détection d'un événement de retournement imminent comprend l'étape consistant à :
comparer ladite corrélation à un seuil calibré (90).

8. Procédé selon la revendication 1, dans lequel l'étape de détection d'un événement de retournement imminent comprend les étapes consistant à :
intégrer ladite différence (74) pour déterminer une vitesse de roulis dudit véhicule (10), et
détecter un événement de retournement imminent lorsque la vitesse de roulis déterminée dépasse un seuil calibré (78).

9. Procédé selon la revendication 8, comprenant l'étape de :
filtrage passe-haut d'au moins une parmi ladite différence et ladite vitesse de roulis prédéterminées pour supprimer des erreurs de rappel dues à des excursions, qui ne sont pas en rapport avec le roulis, de ladite différence (76 ; 76')

10. Procédé selon la revendication 1, dans lequel l'étape de détection d'un événement de retournement imminent comprend les étapes consistant à :
calculer une moyenne mobile de ladite différence sur un intervalle de temps prédéfini (94), et
détecter un événement de retournement imminent si ladite moyenne mobile dépasse un seuil calibré (96).

11. Procédé selon la revendication 1, comportant les étapes consistant à:
déterminer une somme de ladite première accélération selon l'axe z et de ladite seconde accélération selon l'axe z (98), et
détecter un événement de retournement imminent dudit véhicule sur la base de ladite différence uniquement si ladite somme dépasse également un seuil calibré pendant au moins une période de temps prédéterminé (100, 102, 104, 50).

12. Procédé selon la revendication 1, comprenant les étapes consistant à :
intégrer deux fois ladite différence pour déterminer un angle de roulis de véhicule (74), et
détecter un événement de retournement imminent lorsque l'angle de roulis déterminé dépasse un seuil calibré (78).

13. Procédé selon la revendication 1, comportant les étapes consistant à :
intégrer deux fois ladite différence pour déterminer un angle de roulis dudit véhicule (74), et
empêcher l'étape de détection d'un événement de retournement imminent lorsque l'angle de roulis déterminé est caractéristique d'un événement de retombée suivant un quasi-retournement dudit véhicule (50).

14. Procédé selon la revendication 1, comportant les étapes consistant à :
mettre en oeuvre une pluralité d'algorithmes de détection de retournement qui traitent individuellement ladite différence pour reconnaître différents types d'événement de retournement imminent (38, 40, 42), et
détecter un événement de retournement imminent lorsqu'un événement de retournement imminent est reconnu par au moins un desdits algorithmes de détection de retournement (46).

15. Procédé selon la revendication 14, comportant les étapes consistant à :
déterminer une somme de ladite première accélération selon l'axe z et de ladite seconde accélération selon l'axe z (44), et
détecter un événement de retournement imminent dudit véhicule sur la base de ladite différence uniquement si ladite somme est caractéristique d'un événement de retournement (50).

16. Procédé selon la revendication 14, dans lequel lesdits différents types d'événement de retournement imminent comportent des événements de retournement déclenchés par des états de fonctionnement différents dudit véhicule (10).

17. Procédé selon la revendication 16, dans lequel lesdits états de fonctionnement différents comportent un état de traction dans une tranchée (38), un état de rotation libre (40) et un état d'oscillation (42).

18. Procédé selon la revendication 1, dans lequel lesdits premier et second emplacements sont disposés latéralement autour du centre de gravité (18) dudit véhicule (10).

19. Procédé selon la revendication 18, dans lequel lesdits premier et second emplacements sont disposés de manière symétrique autour dudit centre de gravité (18).
